# EUROPEAN PATENT APPLICATION

(11) **EP 4 841 472 A1**
(43) Date of publication of application: **18.11.2026**
(21) Application number: 25738514.6
(22) Date of filing: 09.01.2025
(51) Int. Cl.: G06F 16/483

(54) **INTERACTIVE MEDIA DATA GENERATION METHOD AND APPARATUS, ELECTRONIC DEVICE, AND STORAGE MEDIUM**

(30) Priority: 11.01.2024 CN 202410046071
(71) Applicant: Beijing Zitiao Network Technology Co., Ltd., Beijing 100190 (CN)
(72) Inventor: HE, Qianbin, Beijing 100028 (CN); FAN, Yiming, Beijing 100028 (CN)
(74) Representative: Isarpatent
(86) International application number: PCT/CN2025/071546
(87) International publication number: WO 2025/148986

(57) **Abstract**

Embodiments of the present disclosure provide an interactive media data generation method and apparatus, an electronic device, and a storage medium. The interactive media data generation method comprises: in response to a first operation, loading a reference label in a multi-modal input box, wherein the first operation is at least used for selecting one media file, and the reference label is used for representing a reference mode for the media file in the process of generating target media data with reference to the media file; generating a prompt text on the basis of the reference label and at least one basic prompt in the multi-modal input box; and generating the target media data on the basis of the prompt text. By means of an interactive operation, a media file is mapped into a multi-modal input box to form a reference label, and a prompt text is generated on the basis of the reference label corresponding to the media file and a basic prompt in the multi-modal input box, so as to generate target media data, thereby replacing a description text with the media file to generate a prompt text so that the generated prompt text can accurately describe user requirements, avoiding the problems of unstable image quality and large image content deviations caused by a prompt input by a user being inaccurate and being unable to accurately describe user requirements, and improving the image quality and the accuracy of image contents.

## Description

The present application claims priority of Chinese Patent Application No. 202410046071.9, filed on January 11, 2024, which is incorporated herein by reference in its entirety as a part of the present application.

### TECHNICAL FIELD

Embodiments of the present disclosure relate to an interactive media data generation method and apparatus, an electronic device, and a storage medium.

### BACKGROUND

Currently, with an artificial intelligence-based content generation (AIGC) technology, a corresponding image may be generated through a prompt input by a user and an image generation model, which greatly improves the efficiency and quality of image generation and lowers the threshold for the user to create content.

However, the quality of the image generated by the image generation model may be directly affected by the prompt input by the user, which may cause the problem of unstable quality and large deviation of image content in the generated image, making it difficult to meet the image generation requirements of the user.

### SUMMARY

Embodiments of the present disclosure provide an interactive media data generation method and apparatus, an electronic device, and a storage medium to overcome the problem of unstable quality and large deviation of image content in a generated image.

In a first aspect, an embodiment of the present disclosure provides an interactive media data generation method, including:
loading a reference label in a multi-modal input box in response to a first operation, where the first operation is at least configured to select one media file, and the reference label is configured to represent a reference mode for the media file in a process of referring to the media file to generate target media data; generating a prompt text according to the reference label and at least one basic prompt in the multi-modal input box; and generating the target media data based on the prompt text.

In a second aspect, an embodiment of the present disclosure provides an interactive media data generation apparatus, including:
an interaction module, configured to load a reference label in a multi-modal input box in response to a first operation, where the first operation is at least configured to select one media file, and the reference label is configured to represent a reference mode for the media file in a process of referring to the media file to generate target media data;
a processing module, configured to generate a prompt text according to the reference label and at least one basic prompt in the multi-modal input box; and
a generation module, configured to generate the target media data based on the prompt text.

In a third aspect, an embodiment of the present disclosure provides an electronic device, including: a processor and a memory;
the memory stores a computer-executed instruction;
the processor executes the computer-executed instruction stored in the memory, so that the at least one processor executes the interactive media data generation method according to the above first aspect and various possible designs of the first aspect.

In a fourth aspect, an embodiment of the present disclosure provides a computer-readable storage medium, a computer-executed instruction is stored in the computer-readable storage medium, and when a processor executes the computer-executed instruction, the interactive media data generation method according to the above first aspect and various possible designs of the first aspect is implemented.

In a fifth aspect, an embodiment of the present disclosure provides a computer program product, including a computer program, and when the computer program is executed by a processor, the interactive media data generation method according to the above first aspect and various possible designs of the first aspect is implemented.

### BRIEF DESCRIPTION OF DRAWINGS

In order to more clearly explain the technical solutions in the embodiments of the present disclosure, the following will briefly introduce the drawings that need to be used in the description of the embodiments. Obviously, the drawings in the following description are some embodiments of the present disclosure. For those of ordinary skill in the art, other drawings may be obtained based on these drawings without paying creative efforts.
Fig. 1 is an application scenario diagram of an interactive media data generation method provided by an embodiment of the present disclosure;
Fig. 2 is a first flowchart of an interactive media data generation method provided by an embodiment of the present disclosure;
Fig. 3 is a schematic diagram of a process of loading a reference label in a multi-modal input box provided by an embodiment of the present disclosure;
Fig. 4 is a schematic diagram of another reference label provided by an embodiment of the present disclosure;
Fig. 5 is a schematic diagram of a process of interacting based on a label window provided by an embodiment of the present disclosure;
Fig. 6 is a flowchart of a specific implementation of step S101 in the embodiment shown in Fig. 2;
Fig. 7 is a schematic diagram of a process of loading a reference label through a drag-and-drop operation provided by an embodiment of the present disclosure;
Fig. 8 is a second flowchart of an interactive media data generation method provided by an embodiment of the present disclosure;
Fig. 9 is a flowchart of a specific implementation of step S201 in the embodiment shown in Fig. 8;
Fig. 10 is a schematic diagram of a process of setting a target position provided by an embodiment of the present disclosure;
Fig. 11 is a flowchart of a specific implementation of step S202 in the embodiment shown in Fig. 8;
Fig. 12 is a structural block diagram of an interactive media data generation apparatus provided by an embodiment of the present disclosure;
Fig. 13 is a schematic structural diagram of an electronic device provided by an embodiment of the present disclosure; and
Fig. 14 is a schematic hardware structural diagram of an electronic device provided by an embodiment of the present disclosure.

### DETAILED DESCRIPTION

In order to make objectives, technical solutions and advantages of embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of the embodiments. Based on the embodiments in the present disclosure, all other embodiments obtained by those of ordinary skill in the art without paying creative efforts belong to the protection scope of the present disclosure.

It should be noted that user information (including but not limited to user device information, user personal information, etc.) and data (including but not limited to data for analysis, stored data, displayed data, etc.) involved in the present disclosure are information and data authorized by the user or fully authorized by all parties, and the collection, use and processing of relevant data need to comply with relevant laws, regulations and standards of relevant countries and regions, and provide corresponding operation entrance for the user to choose authorization or rejection.

The following will explain the application scenarios of the embodiments of the present disclosure:

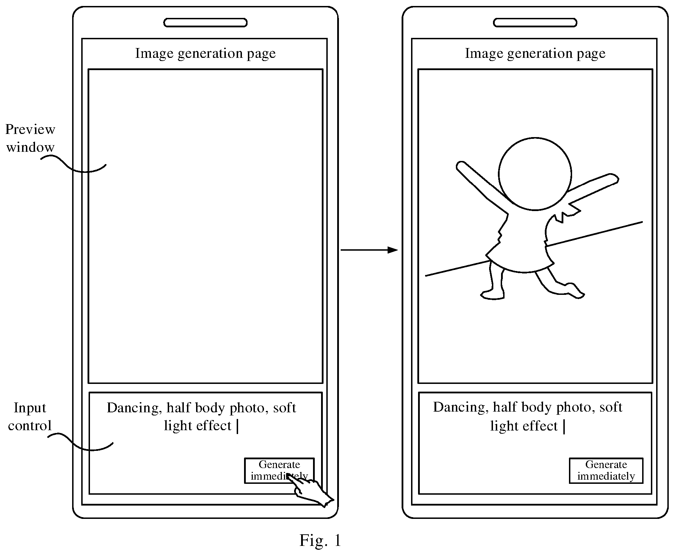

Fig. 1 is an application scenario diagram of an interactive media data generation method provided by an embodiment of the present disclosure. The interactive media data generation method provided by the embodiment of the present disclosure may be applied to an application with a media generation function, and more specifically, may be applied to an application scenario of generating media data such as images and videos based on user descriptions. An execution body of this embodiment may be a terminal device running the above application with the media generation function, a server deploying a server corresponding to the above application, or other electronic devices with similar functions. As shown in Fig. 1, taking the terminal device as the execution body of the method in this embodiment and an application scenario of generating an image based on a user description as an example, the terminal device displays an image generation page after running the above application. In the image generation page, at least an input control for receiving a prompt input by the user is provided, and the user guides an image generation model to generate a corresponding image by inputting the prompt for limiting image content into the input control. Specifically, as shown in the figure, for example, after the user inputs the prompt "dancing, full body photo, soft light effect" in the input control and clicks a "generate immediately" trigger control, the terminal device converts the above prompt into a corresponding prompt text adapted to the image generation model based on the above prompt, and inputs the prompt text into the image generation model, thereby generating an image satisfying the above "dancing", "full body photo" and "soft light effect", and displaying the image in the preview window of the image generation page to complete the image generation process.

In the related art, in the process of generating an AI image based on the above "text-to-image" form of image generation model, the image quality of the generated AI image is directly affected by the prompt input by the user. When the prompt input by the user is inaccurate or unreasonable, the image generated by the image generation model will deviate from the user's needs. On the other hand, for some complex image content needs, it is difficult for the user to accurately describe them through the prompt, which leads to the fact that the user needs to repeatedly try and optimize the prompt to improve the quality of the generated image. Therefore, the solution in the related art leads to the problem of unstable quality and large deviation of image content in the generated image, which is difficult to meet the image generation requirements of the user.

An embodiment of the present disclosure provides an interactive media data generation method to solve the above problem.

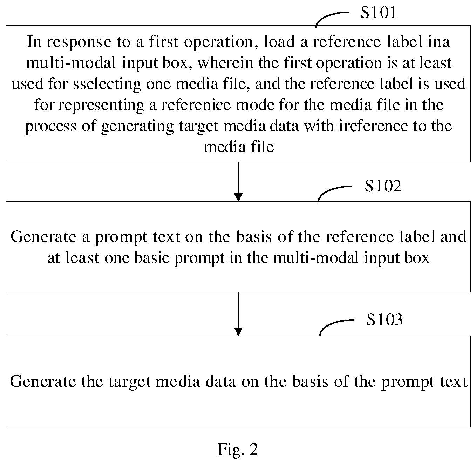

Referring to Fig. 2, Fig. 2 is a first flowchart of an interactive media data generation method provided by an embodiment of the present disclosure. The method of this embodiment may be applied to a terminal device, and the interactive media data generation method includes:
Step S101: loading a reference label in a multi-modal input box in response to a first operation, where the first operation is at least configured to select one media file, and the reference label is configured to represent a reference mode for the media file in a process of referring to the media file to generate target media data.

Exemplarily, referring to the schematic diagram of an application scenario shown in Fig. 1, the application run by the terminal device may be an application client or a browser (Web end), which is not specifically limited here. In an image generation interface where the application is configured to generate an AI image, a multi-modal input box is provided, where the multi-modal input box is an input control that may load and display non-text content. By applying a first operation to the image generation interface, the user may load a reference label in the multi-modal input box, where the first operation is at least configured to select one media file, and the media file is used as reference information to generate target media data. The target media data includes, for example, an image, a video, music, or a medium (multimedia data) in which two or more media data are superimposed, generated based on the AIGC technology. In the following embodiments, the case where the target media data is an image (that is, an application scenario of generating an image) is taken as an example for introduction, and other cases are similar and will not be repeated one by one. Further, the reference label is a non-text object that maps the above media file. Further, label content of the reference label is configured to describe the function when the target media data is generated based on the media file. For example, the label content of the reference label includes "referring to a target object", "referring to a person distribution", "referring to a main body", "referring to edge information", etc., which represents the function when the target media data is generated based on the media file.

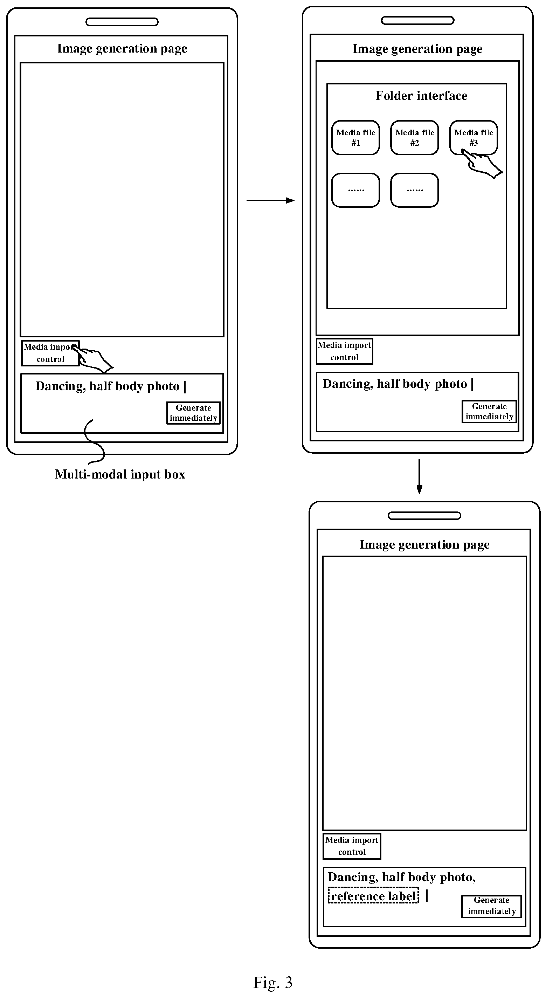

Exemplarily, Fig. 3 is a schematic diagram of a process of loading a reference label in a multi-modal input box provided by an embodiment of the present disclosure, and the above step will be further described in combination with Fig. 3. As shown in Fig. 3, firstly, the multi-modal input box and a media import control are provided in an image generation interface, and by clicking the media import control, a folder interface is displayed on the image generation interface, and one or more media files are displayed in the folder interface, such as media file #1, media file #2, media file #3, etc. shown in the figure. Exemplarily, the media file may be a picture, a video file, an audio file, etc., which is no longer specifically limited, and the media file may be a file stored locally in the terminal device, or a file stored in a server or other storage medium. After that, the user selects one media file (for example, media file #3) from the folder interface as a target media file by applying a first operation (for example, single-clicking and double-clicking), and the terminal device processes the target media file, generates a corresponding reference label, and displays it in the multi-modal input box.

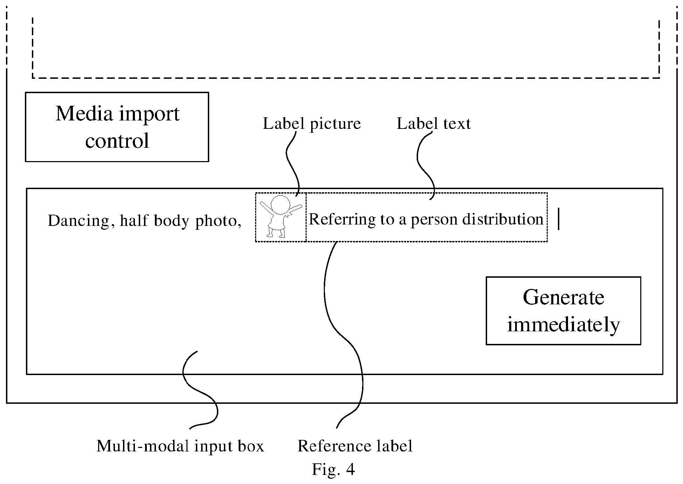

Fig. 4 is a schematic diagram of another reference label provided by an embodiment of the present disclosure. As shown in Fig. 4, exemplarily, the media file is, for example, a video or a picture; the reference label includes label text and a label picture, the label picture includes a thumbnail of the media file, and the label text is used to describe a target reference mode for the media file, such as "referring to a person distribution" shown in the figure, that is, referring to the person distribution in the above picture to generate the target media data.

Further, after loading the reference label in the multi-modal input box, the terminal device may perform subsequent processing on the reference label by responding to a further operation of the user, so as to display the media file corresponding to the reference label. Exemplarily, the step of displaying the media file by operating the reference label includes:
Step S101A: displaying a label window corresponding to the reference label in response to a third operation on the reference label.
Step S101B: displaying the media file in the label window.

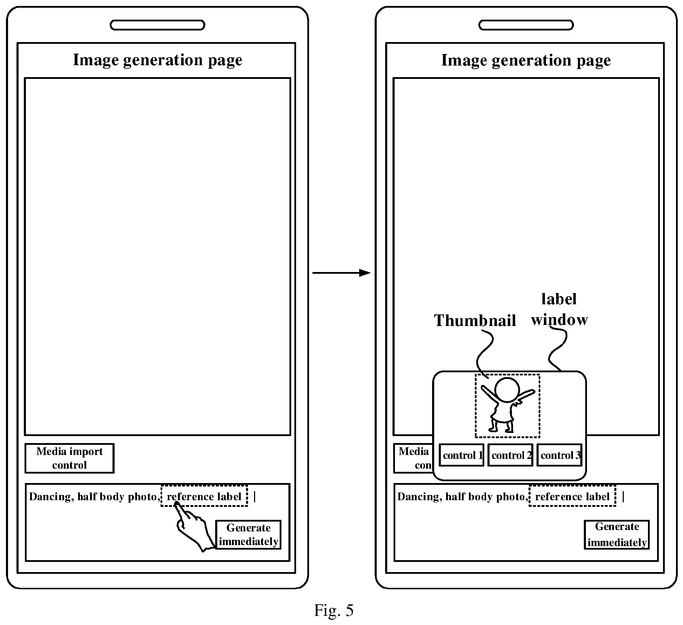

Fig. 5 is a schematic diagram of a process of interacting based on a label window provided by an embodiment of the present disclosure. As shown in Fig. 5, after the reference label is loaded in the multi-modal input box, the user clicks (the third operation) the reference label (based on the solution in the previous embodiment, for example, clicks label text or a label picture), and the label window is displayed above the reference label, and the label window is configured to display the relevant information of the reference label in more detail, as shown in the figure. Optionally, the media file or a thumbnail of the media file corresponding to the reference label is displayed in the label window, that is, the media file is displayed in the label window.

Optionally, a first operation control (shown as control P1 in the figure) is provided in the label window, and the first operation control is configured to replace a first media file corresponding to the reference label with a second media file after being triggered. Specifically, for example, when the terminal device triggers the first operation control in response to a user operation, a folder interface may be displayed, and at the folder interface, the second media file is selected based on the user operation, thereby realizing the replacement of the media file corresponding to the reference label. The specific operation mode has been introduced in the previous embodiment, and will not be repeated here.

Optionally, a second operation control (shown as control P2 in the figure) is provided in the label window, and the second operation control is configured to delete the reference label after being triggered, that is, the content in the multi-modal input box is restored to the state before step S101 of this embodiment is executed, and the specific implementation process steps will not be repeated.

Optionally, a third operation control (shown as control P3 in the figure) is provided in the label window, and the third operation control is configured to modify the reference mode for the media file after being triggered. Specifically, the third operation control is configured to configure and modify the target reference mode for the media file, that is, the content corresponding to the label text, for example, by clicking a reference item control, "referring to a person's appearance" is modified to "referring to a person's layout", or the target person corresponding to "referring to a person's appearance" is set. The specific implementation of the third operation control may be set according to the needs, and will not be repeated here.

In the steps of this embodiment, by displaying the label window corresponding to the reference label and realizing further detailed configuration and modification of the reference label based on the label window, further control of the generated target media data is realized, the image quality of the generated target media data is improved, and the image content of the target media data better meets the user's design needs, and the interaction efficiency is improved.

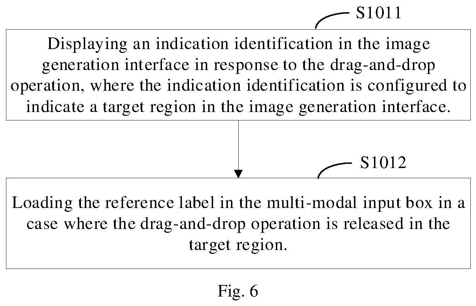

Further, in another possible implementation, the user may also operate the multi-modal input box through a more direct interaction mode, thereby further improving the efficiency of image generation. Exemplarily, the first operation includes a drag-and-drop operation, and the multi-modal input box is provided in an image generation interface. As shown in Fig. 6, a possible implementation of step S101 includes:
Step S1011: displaying an indication identification in the image generation interface in response to the drag-and-drop operation, where the indication identification is configured to indicate a target region in the image generation interface.
Step S1012: loading the reference label in the multi-modal input box in a case where the drag-and-drop operation is released in the target region.

Exemplarily, the drag-and-drop operation is a common interaction operation, which may be realized through an input device such as a mouse or through a touch screen. The drag-and-drop operation generally includes several operation links such as selection (button down), moving (move) and releasing (button up), and the specific implementation principle will not be repeated here. In this embodiment, by responding to the drag-and-drop operation, the terminal device first selects one or more target media files from a folder in the selection operation link, and then drags the target media file into the specified target region through moving and releasing, thereby realizing the step of loading the above target media file into the multi-modal input box.

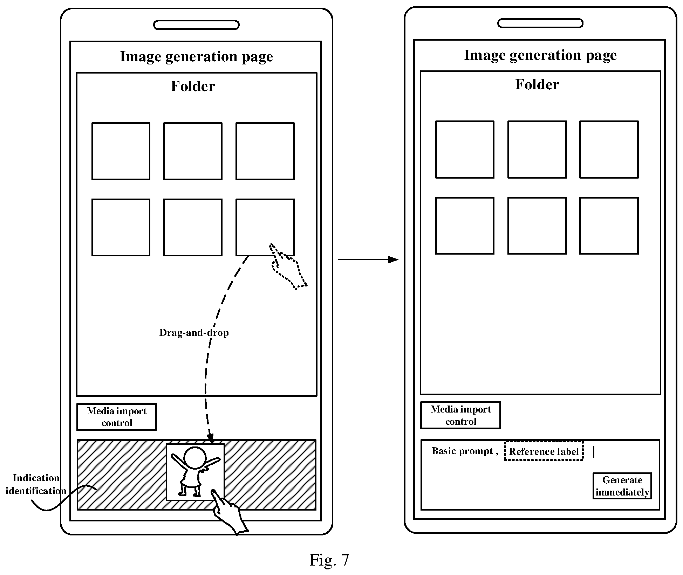

Fig. 7 is a schematic diagram of a process of loading a reference label through a drag-and-drop operation provided by an embodiment of the present disclosure. The process of the above steps will be described in detail below in combination with Fig. 7. Exemplarily, firstly, in response to the drag-and-drop operation applied by the user, the terminal device selects a target media file from a folder of an operating system and drags it to form a drag-and-drop icon, and at the same time, displays an identification indicating a drag-and-drop destination region of the drag-and-drop operation in an image generation interface, that is, an indication identification, and an region in the image generation interface indicated by the indication identification is a target region. When the user moves the drag-and-drop icon into the target region and releases it through the drag-and-drop operation (that is, in a case where the drag-and-drop operation is released in the target region), the terminal device loads a media file corresponding to the drag-and-drop icon, generates a corresponding reference label, and displays the reference label in the multi-modal input box (after a basic prompt). In a possible implementation, the target region is an region where the multi-modal input box is located. In the steps of this embodiment, by responding to the drag-and-drop operation, the media file may be quickly loaded into the multi-modal input box in a drag-and-drop manner, thereby quickly forming a prompt required for generating the target media data, and further improving the operation efficiency of the image generation process.

Step S102: generating a prompt text according to the reference label and at least one basic prompt in the multi-modal input box.

Step S103: generating the target media data based on the prompt text.

Exemplarily, after the reference label is loaded in the multi-modal input box, the corresponding target media data is generated based on the media file by using the reference mode for the media file indicated by the above reference label. Specifically, the multi-modal input box further includes at least one basic prompt, where the basic prompt is configured to limit the content of the target media data to guide the image generation model to generate an image required by the user. Specifically, the basic prompt includes, for example: "dancing, full body photo, soft light effect", etc. Relatively speaking, the basic prompt has a clear and definite indication, and may realize basic content control for the image generated by the image generation model. The basic prompt may be text information pre-input by the user in the multi-modal input box according to the needs, which will not be repeated here. On the basis of obtaining the reference label in the multi-modal input box, the prompt text is generated together in combination with at least one basic prompt in the multi-modal input box, so that the prompt text may not only realize the basic content control (realized based on the basic prompt) for the image generated by the image generation model, but also further realize the complex content control (realized based on the reference label) for the image generated by the image generation model. After that, the prompt text is input into the image generation model, and the target media data satisfying the above content control (basic content control and complex content control) requirements may be generated. The image generation model includes, for example, a Generative Adversarial Network (GAN) model, a Transformer network model, a diffusion network model, etc., and the specific implementation principles and methods of the image generation model will not be repeated here.

Further, exemplarily, the specific implementation steps of step S102 include:
Step S1021: generating a reference prompt according to the reference label.
Step S1022: generating the prompt text according to the basic prompt and the reference prompt.

Further, exemplarily, the specific implementation steps of step S103 include:
inputting the prompt text and the media file into an image generation model to generate the target media data.

The step of generating the reference prompt according to the reference label may be implemented through a corresponding parsing template based on the specific implementation of the reference label. For example, when the label content of the reference label is "referring to a person's appearance", it is parsed into a corresponding reference prompt of "referring to a target object in picture X" based on the corresponding parsing template, where "X" may be a file name corresponding to the media file. Alternatively, the label content of the reference label may also be directly used as the reference prompt.

After that, the reference prompt and the basic prompt are input into a corresponding prompt template to obtain a prompt text including a plurality of text paragraphs, where the prompt template is configured to add a fixed statement for adapting to the image generation model, so that the generated prompt text may better guide the image generation model to generate the target media data that meets the requirements. After that, the prompt text is input into the image generation model, and the image generation model realizes complex content control of the image according to the constraint condition represented by the reference prompt in the prompt text and the media file indicated by the reference prompt, thereby obtaining the target media data that meets the complex content control requirements. The specific implementation process and principle of generating the image by the image generation model based on the prompt text will not be repeated here.

In the embodiments of the present disclosure, the reference label is loaded in the multi-modal input box in response to the first operation, where the first operation is at least configured to select one media file, and the reference label is configured to represent the reference mode for the media file in the process of referring to the media file to generate the target media data; the prompt text is generated according to the reference label and at least one basic prompt in the multi-modal input box; and the target media data is generated based on the prompt text. In an interactive operation manner, the media file is mapped into the multi-modal input box to form the reference label, and the prompt text is generated based on the reference label and the basic prompt corresponding to the media file in the multi-modal input box, and then the target media data is generated, which realizes generating the prompt text by using the media file to replace the description text, so that the generated prompt text may accurately describe the user's needs, and avoids the problem of unstable image quality and large deviation of image content caused by inaccurate prompt input by the user and inability to accurately describe the user's needs, and improves the image quality and image content accuracy.

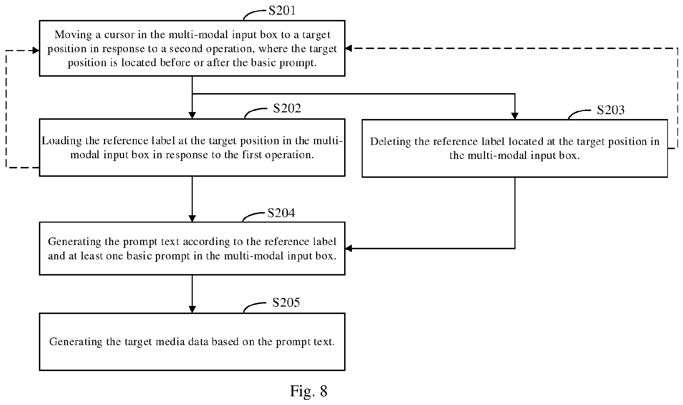

Referring to Fig. 8, Fig. 8 is a second flowchart of an interactive media data generation method provided by an embodiment of the present disclosure. On the basis of the embodiment shown in Fig. 2, this embodiment further details step S101 and adds a step of adjusting the reference label. The interactive media data generation method includes:
Step S201: moving a cursor in the multi-modal input box to a target position in response to a second operation, where the target position is located before or after the basic prompt.

Exemplarily, in the case that the basic prompt has been input in the multi-modal input box, loading the reference label into the multi-modal input box is equivalent to inserting content, which therefore involves the problem of how to determine the insertion position of the reference label. In a possible implementation, the insertion position may be set after the last character in the multi-modal input box by default, that is, the reference label is inserted after the existing basic prompt. In another possible implementation, the terminal device may dynamically set the insertion position of the reference label based on user needs.

Further, in the application scenario involved in this embodiment, because the subsequent steps need to generate the prompt text based on the basic prompt and the reference label input in the multi-modal input box, when the arrangement order of the basic prompt and the reference label is different, the generated prompt text may be different, which in turn leads to the difference in the finally generated target media data. Therefore, controlling the insertion position of the reference label may realize the effect of controlling the image content of the target media data. In this embodiment, the terminal device first moves the cursor in the multi-modal input box to the target position based on the second operation applied by the user, and the target position is located before or after the basic prompt, that is, the basic prompt is a whole composed of a plurality of characters, and the target position may only be located outside the basic prompt, so as to avoid destroying the original basic prompt. The second operation includes, for example, clicking a left movement key, a right movement key, etc.

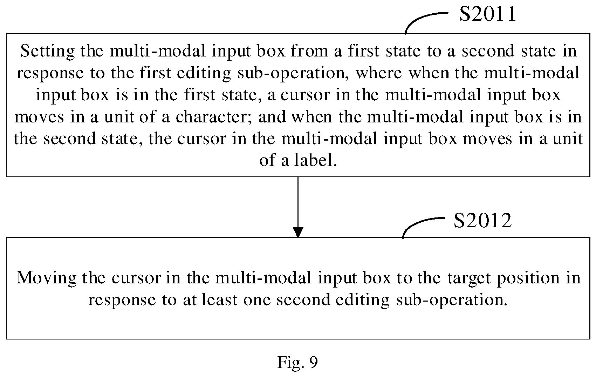

Further, exemplarily, the second operation includes a first editing sub-operation and a second editing sub-operation. As shown in Fig. 9, a specific implementation of step S201 includes:
Step S2011: setting the multi-modal input box from a first state to a second state in response to the first editing sub-operation, where when the multi-modal input box is in the first state, a cursor in the multi-modal input box moves in a unit of a character; and when the multi-modal input box is in the second state, the cursor in the multi-modal input box moves in a unit of a label;
Step S2012: moving the cursor in the multi-modal input box to the target position in response to at least one second editing sub-operation.

Exemplarily, the second operation includes two operation links: the first editing sub-operation and the second editing sub-operation, the first editing sub-operation is configured to set the state of the multi-modal input box, and the second editing sub-operation is configured to trigger the cursor movement. Specifically, the multi-modal input box includes a first state and a second state, and when the multi-modal input box is in the first state, the cursor in the multi-modal input box moves in a unit of a character, at this time, the user may move the cursor (for example, through a third editing sub-operation) to modify the basic prompt. When the multi-modal input box is in the second state, the cursor in the multi-modal input box moves in a unit of a label, and at this time, because the cursor cannot be moved into the basic prompt, the basic prompt cannot be modified, but the user may control the cursor to move between (outside) the basic prompts by realizing the second editing sub-operation, thereby improving the efficiency and accuracy of setting the target position.

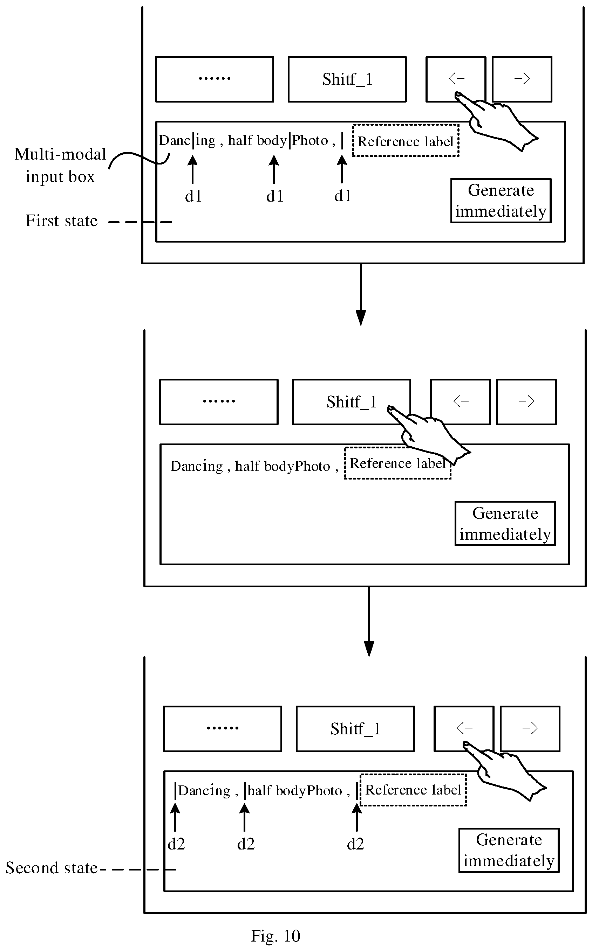

Fig. 10 is a schematic diagram of a process of setting a target position provided by an embodiment of the present disclosure. As shown in Fig. 10, exemplarily, in the image generation interface, a switching control (shown as Shift_1 in the figure) for switching the state of the multi-modal input box and movement controls (shown as "←" and "→" in the figure) for adjusting the left and right movement of the cursor are provided. The basic prompt "dancing, half body photo" has been input in the multi-modal input box. Before the user clicks the switching control, the multi-modal input box is in the first state, and at this time, by triggering the movement control, the cursor may move inside the basic prompt, for example, the cursor may move to position d1. After the user clicks the switching control (the first editing sub-operation), the multi-modal input box is in the second state, and at this time, by triggering the movement control (the second editing sub-operation), the cursor may only move outside the basic prompt, for example, the cursor may move to position d2, but cannot move to the previous position d1.

In this embodiment, through the two operation links of the first editing sub-operation and the second editing sub-operation, the multi-modal input box and the cursor movement are respectively controlled, thereby realizing the technical effect of taking into account both flexible modification of the basic prompt and efficient and accurate setting of the target position.

Step S202: loading the reference label at the target position in the multi-modal input box in response to the first operation.

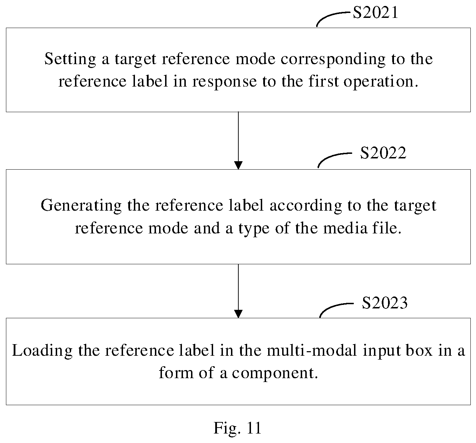

Exemplarily, after the target position is determined, the reference label may be inserted based on the target position, thereby realizing precise loading of the reference label based on the position in the multi-modal input box. In a possible implementation, as shown in Fig. 11, a specific implementation of step S202 includes:
Step S2021: setting a target reference mode corresponding to the reference label in response to the first operation.
Step S2022: generating the reference label according to the target reference mode and a type of the media file.
Step S2023: loading the reference label in the multi-modal input box in a form of a component.

Exemplarily, firstly, the terminal sets a target reference mode corresponding to the reference label in response to the first operation, where the first operation is, for example, an operation of selecting a target media file, and more specifically, for example, a click operation of selecting the target media file through a folder interface, a drag-and-drop operation of dragging the target media file into a target region in an image generation interface in a drag-and-drop manner. The specific implementation of the above first operation has been described in detail in the previous embodiments, and will not be repeated here. Further, while responding to the first operation, the terminal device may further display a setting page for setting the target reference mode, and the setting of the target reference mode is completed through the setting page. More specifically, for example, the user inputs description text representing the target reference mode in the setting page, and the terminal device generates the target reference mode according to the description text. In this case, the target reference mode is represented by the text. Alternatively, the terminal device performs semantic understanding according to the description text and performs regression based on a knowledge base, thereby obtaining the target reference mode. In this case, the target reference mode may be identified by an identification. For the specific implementation process of setting the target reference mode through the setting page, reference may be made to the implementation process of setting the target reference mode after triggering the third operation control in the embodiment shown in Fig. 5, and through the above manner, the purpose of configuring and modifying the target reference mode for the media file is realized. Currently, it may be understood that the process of setting the target reference mode corresponding to the reference label may also be realized through other operation manners, and the specific operation manner may be set according to the needs, which will not be exemplified here.

In another possible implementation, the above target reference mode is a preset fixed value or a dynamic value determined according to the type of the media file. That is, the terminal device does not need to perform the step of acquiring the target reference mode set by the user. That is, step S202 may be realized only by executing steps S2022-S2023, so as to reduce operation steps in a specific scenario and improve the efficiency of image generation, which will not be repeated here.

After that, a label component is created according to the set target reference mode and loaded into the multi-modal input box, and the component name of the label component is the label content of the reference label. Generally, the label component has interaction capability, and when the user applies an operation to the label component to trigger it, the label component performs a response function, such as the function of displaying the label window in the embodiment shown in Fig. 5. The creation steps such as the specific implementation and initialization process of the label component are based on the specific operating system and needs to be set, and will not be introduced in detail here. The implementation process of loading the label component into the multi-modal input box may be realized by calling a specific loading interface of the multi-modal input box, which will not be described in detail here.

Further, in the case that the user does not need to set the target reference mode, the first operation includes a paste operation, and the loading of the reference label may be realized faster through the paste operation. Exemplarily, in another possible implementation, the implementation steps of step S202 include:
Step S2024: reading a media file from a clipboard in response to the paste operation;
Step S2025: loading the media file, generating the reference label according to a media type of the media file, and displaying the reference label at the target position.

Exemplarily, the paste operation refers to an operation of writing data in the clipboard into a specified object, and the corresponding operation is a copy operation, that is, an operation of writing specified data into the clipboard. The copy operation and the cut operation are related technologies known to those skilled in the art, and both have corresponding implementations under different operating systems, and operation shortcut keys are usually set, which will not be described in detail here. Specifically, after the cursor is moved to the target position, the terminal device reads the media file from the clipboard by responding to the paste operation of the user, identifies the media type of the media file, generates the reference label, and quickly displays it at the target position. For example, when the media file is a video, a label template M_1 corresponding to the "video type" is acquired to generate a corresponding reference label, where the label template M_1 carries fixed text describing the reference mode of the media file of the "video type", such as "referring to the content of the video", "referring to the content and duration of the video", etc., thereby generating the reference label and displaying it at the target position.

In this embodiment, through the copy operation and paste operation, the reference label may be directly generated at the target position of the multi-modal input box, which realizes the purpose of quickly adding the reference label into the multi-modal input box. In the scenario of using a plurality of media files as a reference, the interaction efficiency of the target media data may be further improved.

Optionally, it also includes:
Step S203: deleting the reference label located at the target position in the multi-modal input box.

Exemplarily, on the other hand, after setting the target position by moving the cursor, in addition to inserting (loading) the reference label as shown in the steps of the above embodiments, the reference label at the target position may also be deleted according to the needs, and the specific operation manner includes, for example: the terminal device deletes the reference label at the target position in response to a delete operation (for example, pressing the delete key on the keyboard) input by the user. More specifically, for example, the delete operation includes a first delete sub-operation and a second delete sub-operation, and the first delete sub-operation and the second delete sub-operation may be realized based on the same operation manner, for example, the user presses the delete key on the keyboard for the first time, which is the first delete sub-operation; the user presses the delete key on the keyboard for the second time, which is the second delete sub-operation. Further, when the terminal device responds to the first delete sub-operation, the reference label at the current target position, that is, the reference label to be deleted, is highlighted; when the terminal device responds to the second delete sub-operation, the highlighted reference label is deleted. Alternatively, the terminal device deletes the reference label at the target position in response to the user's trigger operation on the second operation control (referring to Fig. 5), which may be specifically referred to the detailed introduction in the embodiment shown in Fig. 5, and is not specifically limited here.

Step S204: generating the prompt text according to the reference label and at least one basic prompt in the multi-modal input box.

Step S205: generating the target media data based on the prompt text.

In this embodiment, the implementation manners of step S204-step S205 are the same as the implementation manners of step S102-step S103 in the embodiment shown in Fig. 2 of the present disclosure, which will not be repeated here.

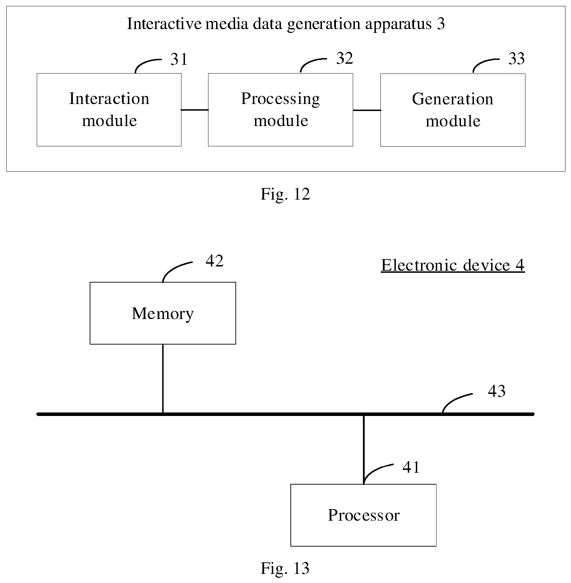

Corresponding to the interactive media data generation method of the above embodiments, Fig. 12 is a structural block diagram of an interactive media data generation apparatus provided by an embodiment of the present disclosure. For convenience of explanation, only parts related to the embodiments of the present disclosure are shown. Referring to Fig. 12, the interactive media data generation apparatus 3 includes:
an interaction module 31, configured to load a reference label in a multi-modal input box in response to a first operation, where the first operation is at least configured to select one media file, and the reference label is configured to represent a reference mode for the media file in a process of referring to the media file to generate target media data;
a processing module 32, configured to generate a prompt text according to the reference label and at least one basic prompt in the multi-modal input box; and
a generation module 33, configured to generate the target media data based on the prompt text.

According to one or more embodiments of the present disclosure, the interaction module 31 is further configured to: move a cursor in the multi-modal input box to a target position in response to a second operation, where the target position is located before or after the basic prompt; and the interaction module 31, when loading the reference label in the multi-modal input box in response to the first operation, is further configured to: load the reference label at the target position in the multi-modal input box in response to the first operation.

According to one or more embodiments of the present disclosure, the second operation includes a first editing sub-operation and a second editing sub-operation, and the interaction module 31, when moving the cursor in the multi-modal input box to the target position in response to the second operation, is further configured to: set the multi-modal input box from a first state to a second state in response to the first editing sub-operation, where when the multi-modal input box is in the first state, the cursor in the multi-modal input box moves in a unit of a character; and when the multi-modal input box is in the second state, the cursor in the multi-modal input box moves in a unit of a label; and move the cursor in the multi-modal input box to the target position in response to at least one second editing sub-operation.

According to one or more embodiments of the present disclosure, the first operation includes a paste operation; and the interaction module 31, when loading the reference label at the target position in the multi-modal input box in response to the first operation, is further configured to: read the media file from a clipboard in response to the paste operation; and load the media file, and generate the reference label according to a media type of the media file and display the reference label at the target position.

According to one or more embodiments of the present disclosure, the first operation includes a drag-and-drop operation, and the multi-modal input box is provided in an image generation interface; and the interaction module 31, when loading the reference label in the multi-modal input box in response to the first operation, is further configured to: display an indication identification in the image generation interface in response to the drag-and-drop operation, where the indication identification is configured to indicate a target region in the image generation interface; and load the reference label in the multi-modal input box in a case where the drag-and-drop operation is released in the target region.

According to one or more embodiments of the present disclosure, the interaction module 31, when loading the reference label in the multi-modal input box in response to the first operation, is further configured to: set a target reference mode corresponding to the reference label in response to the first operation; generate the reference label according to the target reference mode and a type of the media file; and load the reference label in the multi-modal input box in a form of a component.

According to one or more embodiments of the present disclosure, the reference label includes label text and a label picture, the label picture includes a thumbnail of the media file, and the label text is used to describe the target reference mode for the media file.

According to one or more embodiments of the present disclosure, the interaction module 31 is further configured to: display a label window corresponding to the reference label in response to a third operation for the reference label; and display the media file in the label window.

According to one or more embodiments of the present disclosure, it further includes at least one of the following: a first operation control is provided in the label window, and the first operation control is configured to replace a first media file corresponding to the reference label with a second media file after being triggered; a second operation control is provided in the label window, and the second operation control is configured to delete the reference label after being triggered; and a third operation control is provided in the label window, and the third operation control is configured to modify the reference mode for the media file after being triggered.

According to one or more embodiments of the present disclosure, the processing module 32 is further configured to: generate a reference prompt according to the reference label; and generate the prompt text according to the basic prompt and the reference prompt; and the generation module 33 is further configured to: input the prompt text and the media file into an image generation model to generate the target media data.

The interaction module 31, the processing module 32 and the generation module 33 are connected in sequence. The interactive media data generation apparatus 3 provided by this embodiment may execute the technical solutions of the above method embodiments, and its implementation principles and technical effects are similar, which will not be repeated here in this embodiment.

Fig. 13 is a schematic structural diagram of an electronic device provided by an embodiment of the present disclosure. As shown in Fig. 13, the electronic device 4 includes:
a processor 41 and a memory 42 communicatively connected to the processor 41;
the memory 42 stores a computer-executed instruction;
the processor 41 executes the computer-executed instruction stored in the memory 42 to implement the interactive media data generation method in the embodiments shown in Fig. 2 to Fig. 11.

Optionally, the processor 41 and the memory 42 are connected through a bus 43.

The relevant descriptions may be understood by referring to the relevant descriptions and effects corresponding to the steps in the embodiments corresponding to Fig. 2 to Fig. 11, and details are not repeated here.

An embodiment of the present disclosure provides a computer-readable storage medium, a computer-executed instruction is stored in the computer-readable storage medium, and when the computer-executed instruction is executed by a processor, the interactive media data generation method provided by any one of the embodiments corresponding to Fig. 2 to Fig. 11 of the present disclosure is implemented.

An embodiment of the present disclosure provides a computer program product, including a computer program, and when the computer program is executed by a processor, the interactive media data generation method provided by any one of the embodiments corresponding to Fig. 2 to Fig. 11 of the present disclosure is implemented.

In order to implement the above embodiments, an embodiment of the present disclosure further provides an electronic device.

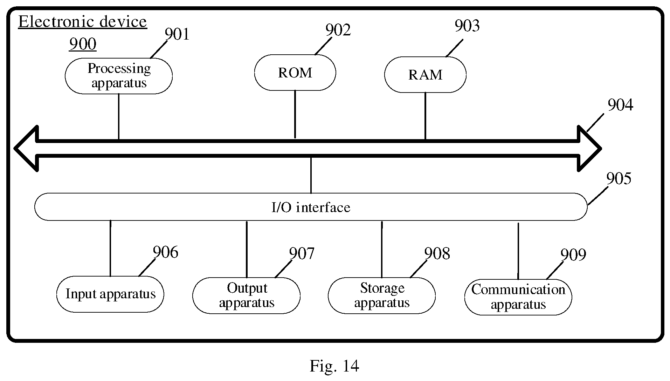

Referring to Fig. 14, it shows a schematic structural diagram of an electronic device 900 suitable for implementing an embodiment of the present disclosure, and the electronic device 900 may be a terminal device or a server. The terminal device may include, but is not limited to, a mobile terminal such as a mobile phone, a notebook computer, a digital broadcast receiver, a personal digital assistant (abbreviated as PDA), a tablet computer, a portable media player (abbreviated as PMP), a vehicle-mounted terminal (such as a vehicle-mounted navigation terminal), etc., and a fixed terminal such as a digital TV, a desktop computer, etc. The electronic device shown in Fig. 14 is only an example, and should not bring any limitation to the functions and application scope of the embodiments of the present disclosure.

As shown in Fig. 14, the electronic device 900 may include a processing apparatus (such as a central processing unit, a graphics processing unit, etc.) 901, which may perform various appropriate actions and processing according to a program stored in a read-only memory (abbreviated as ROM) 902 or a program loaded from a storage apparatus 908 into a random access memory (abbreviated as RAM) 903. In the RAM 903, various programs and data required for the operation of the electronic device 900 are also stored. The processing apparatus 901, the ROM 902 and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (abbreviated as LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 14 shows the electronic device 900 with various apparatuses, it should be understood that it is not required to implement or have all the apparatuses shown. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a computer-readable medium, and the computer program includes program code for executing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the above-mentioned functions defined in the method of the embodiment of the present disclosure are executed.

It should be noted that the above computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus or device. In the present disclosure, a computer-readable signal medium may include a data signal propagated in a baseband or as a part of a carrier wave, and computer-readable program code is carried in the data signal. This propagated data signal may take many forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program code contained on the computer-readable medium may be transmitted by any suitable medium, including but not limited to: a wire, an optical cable, a radio frequency (RF), etc., or any suitable combination of the above.

The above computer-readable medium may be contained in the above electronic device, or may exist alone without being assembled into the electronic device.

The above computer-readable medium carries one or more programs, and when the one or more programs are executed by the electronic device, the electronic device is configured to execute the method shown in the above embodiments.

The computer program code for executing the operations of the present disclosure may be written in one or more programming languages or a combination thereof. The above programming languages include object-oriented programming languages such as Java, Smalltalk, C++, and conventional procedural programming languages such as "C" language or similar programming languages. The program code may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local region network (abbreviated as LAN) or a wide region network (abbreviated as WAN), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented by software or by hardware. Among them, the name of a unit or module does not constitute a limitation on the unit itself under certain circumstances.

The functions described above may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

In a first aspect, according to one or more embodiments of the present disclosure, an interactive media data generation method is provided, including:
loading a reference label in a multi-modal input box in response to a first operation, where the first operation is at least configured to select one media file, and the reference label is configured to represent a reference mode for the media file in a process of referring to the media file to generate target media data; generating a prompt text according to the reference label and at least one basic prompt in the multi-modal input box; and generating the target media data based on the prompt text.

According to one or more embodiments of the present disclosure, the method further includes: moving a cursor in the multi-modal input box to a target position in response to a second operation, where the target position is located before or after the basic prompt; and the loading a reference label in a multi-modal input box in response to a first operation includes: loading the reference label at the target position in the multi-modal input box in response to the first operation.

According to one or more embodiments of the present disclosure, the second operation includes a first editing sub-operation and a second editing sub-operation, and the moving the cursor in the multi-modal input box to a target position in response to a second operation includes: setting the multi-modal input box from a first state to a second state in response to the first editing sub-operation, where when the multi-modal input box is in the first state, the cursor in the multi-modal input box moves in a unit of a character; and when the multi-modal input box is in the second state, the cursor in the multi-modal input box moves in a unit of a label; and moving the cursor in the multi-modal input box to the target position in response to at least one second editing sub-operation.

According to one or more embodiments of the present disclosure, the first operation includes a paste operation; and the loading the reference label at the target position in the multi-modal input box in response to the first operation includes: reading the media file from a clipboard in response to the paste operation; and loading the media file, generating the reference label according to a media type of the media file, and displaying the reference label at the target position.

According to one or more embodiments of the present disclosure, the first operation includes a drag-and-drop operation, and the multi-modal input box is provided in an image generation interface; and the loading a reference label in a multi-modal input box in response to a first operation includes: displaying an indication identification in the image generation interface in response to the drag-and-drop operation, where the indication identification is configured to indicate a target region in the image generation interface; and loading the reference label in the multi-modal input box in a case where the drag-and-drop operation is released in the target region.

According to one or more embodiments of the present disclosure, the loading a reference label in a multi-modal input box in response to a first operation includes: setting a target reference mode corresponding to the reference label in response to the first operation; generating the reference label according to the target reference mode and a type of the media file; and loading the reference label in the multi-modal input box in a form of a component.

According to one or more embodiments of the present disclosure, the reference label includes label text and a label picture, the label picture includes a thumbnail of the media file, and the label text is used to describe the target reference mode for the media file.

According to one or more embodiments of the present disclosure, the method further includes: displaying a label window corresponding to the reference label in response to a third operation for the reference label; and displaying the media file in the label window.

According to one or more embodiments of the present disclosure, it further includes at least one of the following: a first operation control is provided in the label window, and the first operation control is configured to replace a first media file corresponding to the reference label with a second media file after being triggered; a second operation control is provided in the label window, and the second operation control is configured to delete the reference label after being triggered; and a third operation control is provided in the label window, and the third operation control is configured to modify the reference mode for the media file after being triggered.

According to one or more embodiments of the present disclosure, the generating a prompt text according to the reference label and at least one basic prompt in the multi-modal input box includes: generating a reference prompt according to the reference label; and generating the prompt text according to the basic prompt and the reference prompt; and the generating the target media data based on the prompt text includes: inputting the prompt text and the media file into an image generation model to generate the target media data.

In a second aspect, according to one or more embodiments of the present disclosure, an interactive media data generation apparatus is provided, including:
an interaction module, configured to load a reference label in a multi-modal input box in response to a first operation, where the first operation is at least configured to select one media file, and the reference label is configured to represent a reference mode for the media file in a process of referring to the media file to generate target media data;
a processing module, configured to generate a prompt text according to the reference label and at least one basic prompt in the multi-modal input box; and
a generation module, configured to generate the target media data based on the prompt text.

According to one or more embodiments of the present disclosure, the interaction module is further configured to: move a cursor in the multi-modal input box to a target position in response to a second operation, where the target position is located before or after the basic prompt; and the interaction module, when loading the reference label in the multi-modal input box in response to the first operation, is further configured to: load the reference label at the target position in the multi-modal input box in response to the first operation.

According to one or more embodiments of the present disclosure, the second operation includes a first editing sub-operation and a second editing sub-operation, and the interaction module, when moving the cursor in the multi-modal input box to the target position in response to the second operation, is further configured to: set the multi-modal input box from a first state to a second state in response to the first editing sub-operation, where when the multi-modal input box is in the first state, the cursor in the multi-modal input box moves in a unit of a character; and when the multi-modal input box is in the second state, the cursor in the multi-modal input box moves in a unit of a label; and move the cursor in the multi-modal input box to the target position in response to at least one second editing sub-operation.

According to one or more embodiments of the present disclosure, the first operation includes a paste operation; and the interaction module, when loading the reference label at the target position in the multi-modal input box in response to the first operation, is further configured to: read the media file from a clipboard in response to the paste operation; and load the media file, and generate the reference label according to a media type of the media file and display the reference label at the target position.

According to one or more embodiments of the present disclosure, the first operation includes a drag-and-drop operation, and the multi-modal input box is provided in an image generation interface; and the interaction module, when loading the reference label in the multi-modal input box in response to the first operation, is further configured to: display an indication identification in the image generation interface in response to the drag-and-drop operation, where the indication identification is configured to indicate a target region in the image generation interface; and load the reference label in the multi-modal input box in a case where the drag-and-drop operation is released in the target region.

According to one or more embodiments of the present disclosure, the interaction module, when loading the reference label in the multi-modal input box in response to the first operation, is further configured to: set a target reference mode corresponding to the reference label in response to the first operation; generate the reference label according to the target reference mode and a type of the media file; and load the reference label in the multi-modal input box in a form of a component.

According to one or more embodiments of the present disclosure, the reference label includes label text and a label picture, the label picture includes a thumbnail of the media file, and the label text is used to describe the target reference mode for the media file.

According to one or more embodiments of the present disclosure, the interaction module is further configured to: display a label window corresponding to the reference label in response to a third operation for the reference label; and display the media file in the label window.

According to one or more embodiments of the present disclosure, it further includes at least one of the following: a first operation control is provided in the label window, and the first operation control is configured to replace a first media file corresponding to the reference label with a second media file after being triggered; a second operation control is provided in the label window, and the second operation control is configured to delete the reference label after being triggered; and a third operation control is provided in the label window, and the third operation control is configured to modify the reference mode for the media file after being triggered.

According to one or more embodiments of the present disclosure, the processing module is further configured to: generate a reference prompt according to the reference label; and generate the prompt text according to the basic prompt and the reference prompt; and the generation module is further configured to: input the prompt text and the media file into an image generation model to generate the target media data.

In a third aspect, according to one or more embodiments of the present disclosure, an electronic device is provided, including: at least one processor and a memory;
the memory stores a computer-executed instruction;
the at least one processor executes the computer-executed instruction stored in the memory, so that the at least one processor executes the interactive media data generation method according to the above first aspect and various possible designs of the first aspect.

In a fourth aspect, according to one or more embodiments of the present disclosure, a computer-readable storage medium is provided, a computer-executed instruction is stored in the computer-readable storage medium, and when a processor executes the computer-executed instruction, the interactive media data generation method according to the above first aspect and various possible designs of the first aspect is implemented.

In a fifth aspect, according to one or more embodiments of the present disclosure, a computer program product is provided, including a computer program, and when the computer program is executed by a processor, the interactive media data generation method according to the above first aspect and various possible designs of the first aspect is implemented.

The above description is only preferred embodiments of the present disclosure and an explanation of the applied technical principles. Those skilled in the art should understand that the disclosed scope involved in the present disclosure is not limited to the technical solutions formed by the specific combination of the above technical features, and should also cover other technical solutions formed by any combination of the above technical features or their equivalent features without departing from the above disclosed concept. For example, the above features and the technical features disclosed in the present disclosure (but not limited to) with similar functions are replaced each other to form a technical solution.

In addition, although the operations are depicted in a particular order, this should not be understood as requiring the operations to be performed in the particular order shown or in a sequential order. Under certain circumstances, multitasking and parallel processing may be advantageous. Similarly, although the above discussion contains several specific implementation details, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An interactive media data generation method, comprising:
loading a reference label in a multi-modal input box in response to a first operation, wherein the first operation is at least configured to select one media file, and the reference label is configured to represent a reference mode for the media file in a process of referring to the media file to generate target media data;
generating a prompt text according to the reference label and at least one basic prompt in the multi-modal input box; and
generating the target media data based on the prompt text.

2. The method of claim 1, further comprising:
moving a cursor in the multi-modal input box to a target position in response to a second operation, wherein the target position is located before or after the basic prompt,
wherein the loading a reference label in a multi-modal input box in response to a first operation comprises:
loading the reference label at the target position in the multi-modal input box in response to the first operation.

3. The method of claim 2, wherein the second operation comprises a first editing sub-operation and a second editing sub-operation, and the moving a cursor in the multi-modal input box to a target position in response to a second operation comprises:
setting the multi-modal input box from a first state to a second state in response to the first editing sub-operation, wherein when the multi-modal input box is in the first state, the cursor in the multi-modal input box moves in a unit of a character; and when the multi-modal input box is in the second state, the cursor in the multi-modal input box moves in a unit of a label; and
moving the cursor in the multi-modal input box to the target position in response to at least one second editing sub-operation.

4. The method of claim 2, wherein the first operation comprises a paste operation; and the loading the reference label at the target position in the multi-modal input box in response to the first operation comprises:
reading the media file from a clipboard in response to the paste operation; and
loading the media file, generating the reference label according to a media type of the media file, and displaying the reference label at the target position.

5. The method of claim 1, wherein the first operation comprises a drag-and-drop operation, and the multi-modal input box is provided in an image generation interface; and
the loading a reference label in a multi-modal input box in response to a first operation comprises:
displaying an indication identification in the image generation interface in response to the drag-and-drop operation, wherein the indication identification is configured to indicate one target region in the image generation interface; and
loading the reference label in the multi-modal input box in a case where the drag-and-drop operation is released in the target region.

6. The method of claim 1, wherein the loading a reference label in a multi-modal input box in response to a first operation comprises:
setting a target reference mode corresponding to the reference label in response to the first operation;
generating the reference label according to the target reference mode and a type of the media file; and
loading the reference label in the multi-modal input box in a form of a component.

7. The method of any of claims 1 to 6, wherein the reference label comprises label text and a label picture, the label picture comprises a thumbnail of the media file, and the label text is used to describe a target reference mode for the media file.

8. The method of claim 7, further comprising:
displaying a label window corresponding to the reference label in response to a third operation for the reference label; and
displaying the media file in the label window.

9. The method of claim 8, further comprising at least one selected from a group consisting of:
a first operation control is provided in the label window, and the first operation control is configured to replace a first media file corresponding to the reference label with a second media file after being triggered;
a second operation control is provided in the label window, and the second operation control is configured to delete the reference label after being triggered; and
a third operation control is provided in the label window, and the third operation control is configured to modify the reference mode for the media file after being triggered.

10. The method of any of claims 1 to 9, wherein the generating a prompt text according to the reference label and at least one basic prompt in the multi-modal input box comprises:
generating a reference prompt according to the reference label; and
generating the prompt text according to the basic prompt and the reference prompt; and
the generating the target media data based on the prompt text comprises:
inputting the prompt text and the media file into an image generation model to generate the target media data.

11. An interactive media data generation apparatus, comprising:
an interaction module, configured to load a reference label in a multi-modal input box in response to a first operation, wherein the first operation is at least configured to select one media file, and the reference label is configured to represent a reference mode for the media file in a process of referring to the media file to generate target media data;
a processing module, configured to generate a prompt text according to the reference label and at least one basic prompt in the multi-modal input box; and
a generation module, configured to generate the target media data based on the prompt text.

12. An electronic device, comprising a processor and a memory,
wherein the memory is configured to store a computer-executed instruction; and
the processor is configured to execute the computer-executed instruction stored in the memory, so that the processor executes the interactive media data generation method of any of claims 1 to 10.

13. A computer-readable storage medium, wherein a computer-executed instruction is stored in the computer-readable storage medium, and when a processor executes the computer-executed instruction, the interactive media data generation method of any of claims 1 to 10 is implemented.

14. A computer program product, comprising a computer program, wherein when the computer program is executed by a processor, the interactive media data generation method of any of claims 1 to 10 is implemented.
